# EUROPEAN PATENT APPLICATION

(11) **EP 2 592 803 A1**
(43) Date of publication of application: **15.05.2013**
(21) Application number: 11777266.5
(22) Date of filing: 30.05.2011
(51) Int. Cl.: H04L 27/26

(54) **METHOD, BASE STATION AND USER EQUIPMENT FOR SENDING AND RECEIVING SOUNDING REFERENCE SIGNAL**

(30) Priority: 09.08.2010 CN 201010248408
(71) Applicant: Huawei Technologies Co., Ltd., Shenzhen, Guangdong 518129 (CN)
(72) Inventor: CLASSON, Brian, Shenzhen Guangdong 518129 (CN); ZHOU, Mingyu, Shenzhen Guangdong 518129 (CN)
(74) Representative: Körber, Martin Hans
(86) International application number: PCT/CN2011/074928
(87) International publication number: WO 2011/137847

(57) **Abstract**

A method for sending and receiving a Sounding Reference Signal (SRS) is provided in the embodiments of the present invention, which relates to the wireless telecommunication technology field and is designed for simplifying signaling design of a telecommunication system. The method includes: receiving a control signaling from a Base Station (BS), wherein a first field in the control signaling is used for indicating whether to transmit data or send the SRS, a second field in the control signaling is used for indicating a frequency-hopping mode for transmitting the data or sending the SRS, and a third field in the control signaling is used for indicating frequency-band information for transmitting the data or sending the SRS; determining whether the control signaling indicates to transmit the data or to send the SRS according to the first field in the control signaling; and sending the SRS, according to the frequency-band information indicated by the third field in the control signaling, through the frequency-hopping mode indicated by the second field in the control signaling, when the first field in the control signaling indicates to send the SRS. A method for receiving the SRS corresponding to the sending method, a base station and a user equipment are also provided in the embodiments of the present invention. The embodiments of the present invention are used for sending the SRS.

## Description

### TECHNICAL FIELD

The present invention relates to the field of wireless communication technology, and particularly to a method, a base station and a user equipment for sending and receiving a sounding reference signal.

### BACKGROUND

The Sounding Reference Signal (SRS) is an uplink signal sent by a User Equipment (UE) to realize the uplink frequency domain scheduling.

In the prior art, the method for sending the SRS is as follows: a Base Station (BS) configures various parameters of the SRS for the UE; the BS sends the parameters of the SRS to the UE through a specific signaling; after receiving the specific signaling, the UE sends the SRS to the BS according to corresponding configurations of the parameters of the SRS, so that the BS may acquire the uplink channel information through the SRS.

However, the inventor of the present application finds that the above method at least has the following problem: design of the specific signaling to control the sending of the SRS increases the signaling overhead and the complexity of the communication system.

### SUMMARY

The embodiments of the present invention provide a method, a base station and a user equipment for sending and receiving a sounding reference signal, which can simplify the signaling design of the communication system.

In order to achieve the above object, the embodiments of the present invention adopt the following technical solutions:

A method for sending a Sounding Reference Signal (SRS), comprising:

receiving a control signaling from a Base Station (BS), wherein a first field in the control signaling is used for indicating whether to transmit data or send the SRS, a second field in the control signaling is used for indicating a frequency-hopping mode for transmitting the data or sending the SRS, and a third field in the control signaling is used for indicating frequency-band information for transmitting the data or sending the SRS;

determining whether the control signaling indicates to send the SRS or to transmit the data according to the first field in the control signaling; and

sending the SRS, according to the frequency-band information indicated by the third field in the control signaling, through the frequency-hopping mode indicated by the second field in the control signaling, when the first field in the control signaling indicates to send the SRS.

A method for receiving a Sounding Reference Signal (SRS), comprising:

generating a control signaling, wherein a first field in the control signaling is used for indicating whether to transmit data or send the SRS, a second field in the control signaling is used for indicating a frequency-hopping mode for transmitting the data or sending the SRS, and a third field in the control signaling is used for indicating frequency-band information for transmitting the data or sending the SRS;

sending the control signaling to a User Equipment (UE); and

receiving the SRS from the UE, wherein the SRS is sent by the UE, according to the frequency-band information indicated by the third field in the control signaling, through the frequency-hopping mode indicated by the second field in the control signaling, when the UE determines that the first field in the control signaling indicates to send the SRS.

In correspondence with the above methods, the embodiment of the present invention provides a Base Station (BS), comprising:

a signaling generating module configured to generate a control signaling, wherein a first field in the control signaling is used for indicating whether to transmit data or send a Sounding Reference Signal (SRS), a second field in the control signaling is used for indicating a frequency-hopping mode for transmitting the data or sending the SRS, and a third field in the control signaling is used for indicating frequency-band information for transmitting the data or sending the SRS;

a signaling sending module configured to send the control signaling to a User Equipment (UE); and

a receiving module configured to receive the SRS from the UE, wherein the SRS is sent by the UE, according to the frequency-band information indicated by the third field in the control signaling, through the frequency-hopping mode indicated by the second field in the control signaling, when the UE determines that the first field in the control signaling indicates to send the SRS.

In correspondence with the above methods, the embodiment of the present invention also provides a User Equipment (UE), comprising:

a signaling receiving module configured to receive a control signaling from a Base Station (BS), wherein a first field in the control signaling is used for indicating whether to transmit data or send a Sounding Reference Signal (SRS), a second field in the control signaling is used for indicating a frequency-hopping mode for transmitting the data or sending the SRS, and a third field in the control signaling is used for indicating frequency-band information for transmitting the data or sending the SRS;

a signaling reading module configured to determine whether the control signaling indicates to send the SRS or transmit the data according to the first field in the control signaling; and

a sending module configured to send the SRS, according to the frequency-band information indicated by the third field in the control signaling, through the frequency-hopping mode indicated by the second field in the control signaling, when the first field in the control signaling indicates to send the SRS.

The embodiment of the present invention reuses the data transmission when sending the SRS, and the UE makes a transmission selection between sending the SRS and transmitting the data according to the control signaling issued by the BS. Whether to send the SRS or transmit the data is controlled through the control signaling issued by the BS, and after reading the control signaling, the UE uses the indicated frequency-hopping mode to send the SRS according to the indicated frequency-band information, when the control signaling indicates to send the SRS. The embodiment of the present invention reuses the signaling that controls the data transmission to schedule the sending of the SRS, and the UE makes a transmission selection between sending the SRS and transmitting the data, thus any new control signaling is not required to be designed for the SRS, thereby reducing the signaling overhead, meanwhile decreasing the complexity of the communication system, and being able to ensure the backward compatibility of the communication system. Further, the embodiment of the present invention can avoid the signal interference when the data transmission and the SRS sending are performed at the same time.

### BRIEF DESCRIPTION OF DRAWINGS

In order to more clearly describe the technical solutions of the embodiments of the present invention, the drawings to be used in the descriptions of the embodiments are briefly introduced as follows. Obviously, the following drawings just illustrate some embodiments of the present invention, and a person skilled in the art can obtain other drawings from these drawings without paying a creative effort.

Fig. 1 is a flowchart of a method for sending an SRS according to Embodiment 1 of the present invention;

Fig. 2 is a flowchart of a sending selection made by a UE according to Embodiment 1 of the present invention;

Fig. 3 is a schematic diagram of a UE sending an SRS from one subframe symbol position according to Embodiment 1 of the present invention;

Fig. 4 is a schematic diagram of a UE sending an SRS from a plurality of sub-frame symbol positions according to Embodiment 1 of the present invention;

Fig. 5 is a schematic diagram of an intra-subframe frequency-hopping for sending an SRS according to Embodiment 1 of the present invention;

Fig. 6 is a schematic diagram of an inter-subframe frequency-hopping for sending an SRS according to Embodiment 1 of the present invention;

Fig. 7 is a schematic diagram of a frequency-hopping scheme for sending an SRS and transmitting data according to Embodiment 1 of the present invention;

Fig. 8 is a schematic diagram of periodically sending an SRS and periodically transmitting data according to Embodiment 2 of the present invention;

Fig. 9 is a schematic diagram of a UE repeatedly sending an SRS according to Embodiment 3 of the present invention;

Fig. 10 is a schematic diagram of a BS according to Embodiment 5 of the present invention;

Fig. 11 is a schematic diagram of a UE according to Embodiment 6 of the present invention;

Fig. 12 is a schematic diagram of a sending module according to Embodiment 6 of the present invention;

Fig. 13 is a schematic diagram of a communication system according to Embodiment 7 of the present invention;

Fig. 14 is a schematic diagram of multiband sending an SRS according to Embodiment 1 of the present invention;

Fig. 15 is a schematic diagram of a UE sending an SRS from one time slot symbol position according to Embodiment 1 of the present invention;

Fig. 16 is a schematic diagram of a UE sending an SRS from multiple time slot symbol positions according to Embodiment 1 of the present invention; and

Fig. 17 is a flowchart of a method for receiving an SRS according to Embodiment 1 of the present invention.

### DESCRIPTION OF EMBODIMENTS

The technical solutions of the embodiments of the present invention will be clearly and completely described as follows in conjunction with the drawings in the embodiments of the present invention. Apparently, the described embodiments are just a part of embodiments of the present invention rather than all the embodiments. Based on the embodiments of the present invention, any other embodiment obtained by a person skilled in the art without paying creative effort will fall within the protection scope of the present invention.

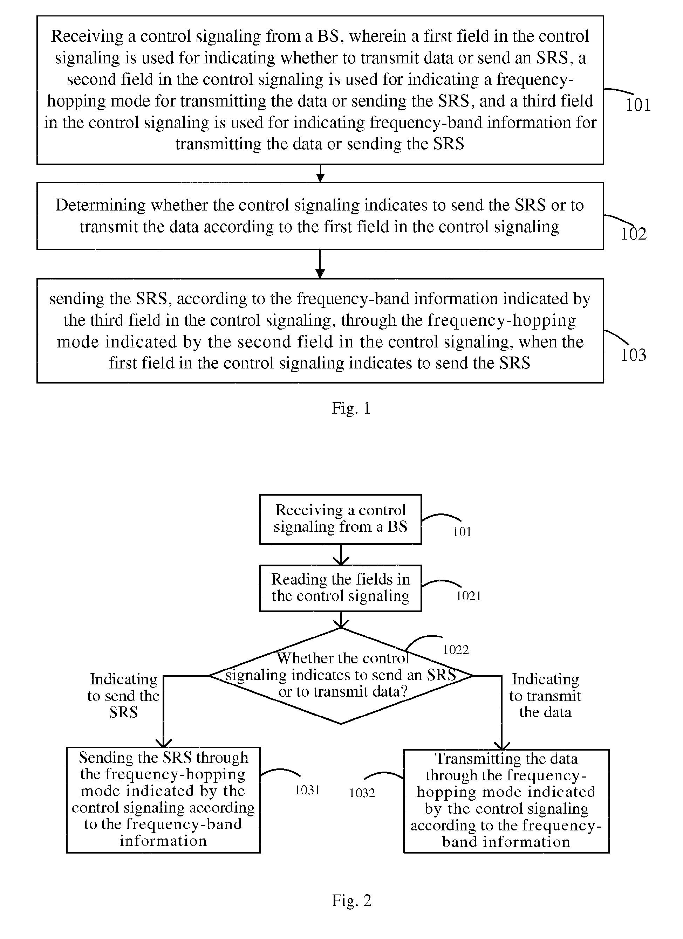

Referring to Fig. 1, Embodiment 1 of the present invention is based on a communication system including a Base Station (BS) and a User Equipment (UE). A method for sending a Sounding Reference Signal (SRS) in the communication system according to Embodiment 1 of the present invention includes the steps of:

Step 101: receiving a control signaling from a BS, wherein a first field in the control signaling is used for indicating whether to transmit data or send an SRS, a second field in the control signaling is used for indicating a frequency-hopping mode for transmitting the data or sending the SRS, and a third field in the control signaling is used for indicating frequency-band information for transmitting the data or sending the SRS.

The signaling sent by the BS to the UE includes multiple fields. Particularly, for example, two common frequency-hopping modes are affirmative frequency-hopping and negative frequency-hopping, which are represented by the states 0 and 1 of one bit in the field, respectively. The first field, the second field and the third field are just used for distinguishing the fields in the control signaling based on their purposes, rather than indicating the field order in the control signaling. In addition, the control signaling is not limited to only including three fields, and it may include a fourth field, a fifth field, etc. for other indications.

The SRS is used for measuring the uplink channel, and the BS uses the measured channel information to perform operations, such as uplink timing detection, power control, uplink frequency domain scheduling, link adaptation, etc. In order that the BS can comprehensively detect the channel conditions, the UE may send the SRS on different frequency bands. In the design of the communication system, the uplink data transmission can support the frequency-hopping mechanism, so the data transmission mechanism can be reused by the SRS sending mechanism.

Step 102: determining whether the control signaling indicates to send the SRS or to transmit the data according to the first field in the control signaling.

In the embodiment of the present invention, the UE reads each field of the control signaling, and sends the SRS or transmits the data in a specified mode according to the content of each field. The present invention integrates the fields having multiple indicative meanings into one kind of signaling, thereby reducing the times of sending the signaling, thus the signaling overhead is saved and the complexity of the communication system is decreased. The embodiment of the present invention reuses the signaling indicating to send an SRS or to transmit data into one kind of signaling, so as to save the overhead of the communication system in additionally designing another kind of signaling for sending the SRS, meanwhile decrease the complexity of the communication system, and be able to ensure the backward compatibility of the communication system. The UE only performs one of the operations of sending the SRS and transmitting the data according to the received control signaling, thereby avoiding the signal interference generated when the above two operations are performed at the same time.

Step 103: sending the SRS, according to the frequency-band information indicated by the third field in the control signaling, through the frequency-hopping mode indicated by the second field in the control signaling, when the first field in the control signaling indicates to send the SRS.

The frequency-hopping mode in the embodiment of the present invention at least includes affirmative frequency-hopping and negative frequency-hopping. More specifically, the sending the SRS according to the frequency-band information, through the frequency-hopping mode indicated by the control signaling may include the following conditions.

When the SRS is sent through negative frequency-hopping mode, the UE sends the SRS using the frequency-band indicated by the frequency-band information; and when the SRS is sent through affirmative frequency-hopping mode, a frequency-band information used at the sending time of the SRS is obtained according to the frequency-band information indicated by the third field in the control signaling and a frequency-hopping rule, and then the SRS is sent according to the frequency-band used at the sending time of the SRS.

For example, when the SRS is sent through affirmative frequency-hopping mode, the frequency-band information may include the original frequency-band information for frequency-hopping. The UE may determine a frequency-band to be used for sending the SRS at the ith sending time according to the time offset of the ith sending time and the original frequency-band based on the set frequency-hopping rule, and send the SRS at the ith sending time in the frequency-band to be used. For example, through a signaling the BS may notify all UEs in a cell with the frequency-hopping rule to send the SRS, or preset a part or all of the contents of the frequency-hopping rule in the BS and the UE. The BS indicates the frequency-hopping mode for sending the SRS through the issued control signaling, for example, only 1 bit of the control signaling is required to notify the UE whether frequency-hopping is employed. If affirmative frequency-hopping is employed, the UE determines which frequency-band indicated by the frequency-hopping rule should be used herein for sending the SRS, according to the current time and the original frequency-band.

Herein, the frequency-hopping rule may be described through mathematical function, including the function construction itself and the parameters related to the function, for example, F = f(f_start,BW,ts,...). F obtained from the function indicates the frequency-band to be used for sending the SRS at next time, and f_start, BW and ts are variable information, wherein f_start denotes the original frequency-band, BW denotes the width of the frequency-band, and ts denotes the time offset information, and wherein f_start and BW are notified through the third field of the control signaling, and ts may indicate the serial number of the sending time of the SRS (e.g., the tsth subframe in one subframe), or the times of sending the SRS (e.g., the next sending is the tsth sending), etc. The frequency-band that should be used at the sending time of the SRS can be obtained from the function.

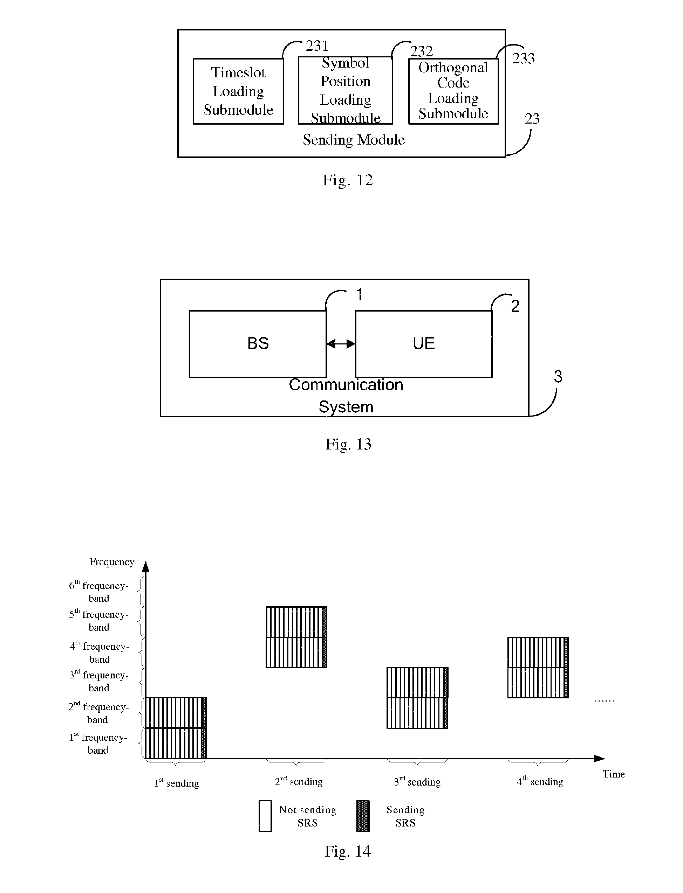

Optionally, the UE may send a plurality of SRSs in a plurality of frequency-bands according to the indication of the control signaling. For example in Fig. 14, when the SRS is sent for the first time, the UE simultaneously sends the SRS on the 1st and 2nd frequency-bands; when the SRS is sent for the second time, the UE simultaneously sends the SRS on the 4th and 5th frequency-bands, and so on. To be noted, the SRSs sent in two frequency-bands may have the same or different frequency-hopping rules.

The embodiment of the present invention reuses the signaling for transmitting the data with the signaling for sending the SRS, thereby forming a transfer switching between the SRS sending and the data transmission by the UE in the communication system. The flow is shown in Fig. 2: 101: receiving a control signaling from a BS; 1021: reading the fields in the control signaling; 1022: judging whether the control signaling indicates to send an SRS or to transmit data; when the control signaling indicates to send the SRS upon judgment, entering step 1031 to send the SRS through the frequency-hopping mode indicated by the control signaling according to the frequency-band information; while when the control signaling indicates to transmit the data upon judgment, entering step 1032 to transmit the data through the frequency-hopping mode indicated by the control signaling according to the frequency-band information.

More specifically, step 103 of the embodiment of the present invention includes at least one of the following operations.

1. Sending the SRS in a subframe timeslot indicated by the control signaling, according to the frequency-band information indicated by the third field, through the frequency-hopping mode indicated by the second field in the control signaling, when the first field in the control signaling indicates to send the SRS, wherein the control signaling further comprises a field indicating the subframe timeslot.

In which, the control signaling indicates that one or multiple subframe timeslots are used by the UE for sending the SRS.

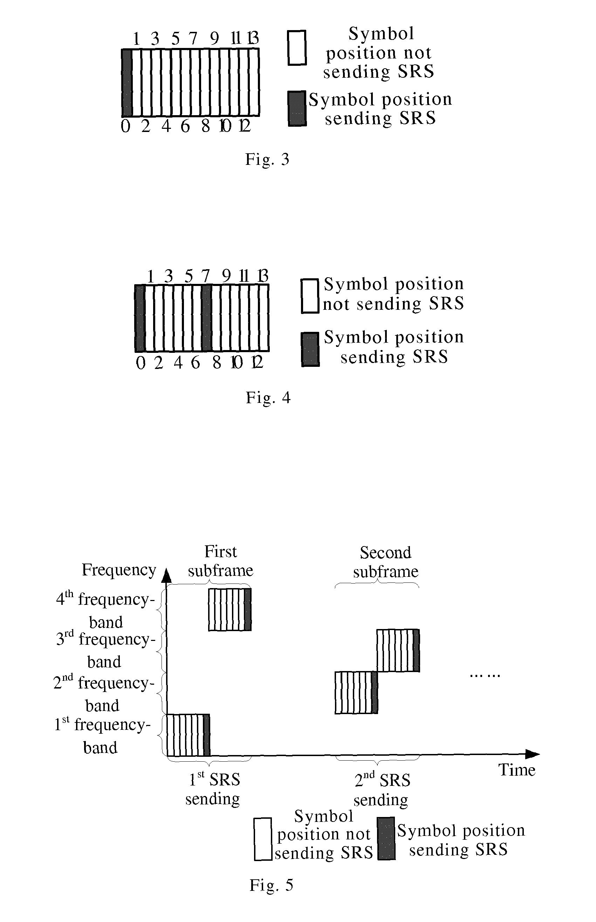

In different communication systems, one subframe sent by the UE to the BS may include different numbers of timeslots. Through a control signaling, the BS may indicate the UE to send the SRS in different timeslots when one subframe includes two timeslots. For example, regarding the situation as illustrated in Fig. 4, when the subframe includes two timeslots, the two SRSs sent by the UE may be located in different timeslots.

2. Sending the SRS in a symbol position indicated by the control signaling, according to the frequency-band information indicated by the third field, through the frequency-hopping mode indicated by the second field in the control signaling, when the first field in the control signaling indicates to send the SRS, wherein the control signaling further comprises a field indicating the symbol position.

The symbol position includes a subframe symbol position or a timeslot symbol position, and the control signaling may indicate one or more symbol positions.

Specifically, one subframe sent by the UE to the BS may include a plurality of subframe symbol positions with consecutive serial numbers, and the control signaling may indicate the UE to send the SRS in one or more subframe symbol positions. As illustrated in Fig. 3, through a control signaling the BS may indicate the UE to send the SRS from one subframe symbol position, and in Fig. 3, the subframe symbol position in which the UE sends the SRS is the first symbol position. Or as illustrated in Fig. 4, through a control signaling the BS may indicate the UE to send the SRS from a plurality of subframe symbol positions, and in Fig. 4, the subframe symbol positions in which the UE sends the SRS are the 1st and 8th symbol positions. Since diversity gain can be obtained by sending the SRS for multiple times, the capability of detecting the channel information can be further enhanced by sending the SRS in the plurality of subframe symbol positions.

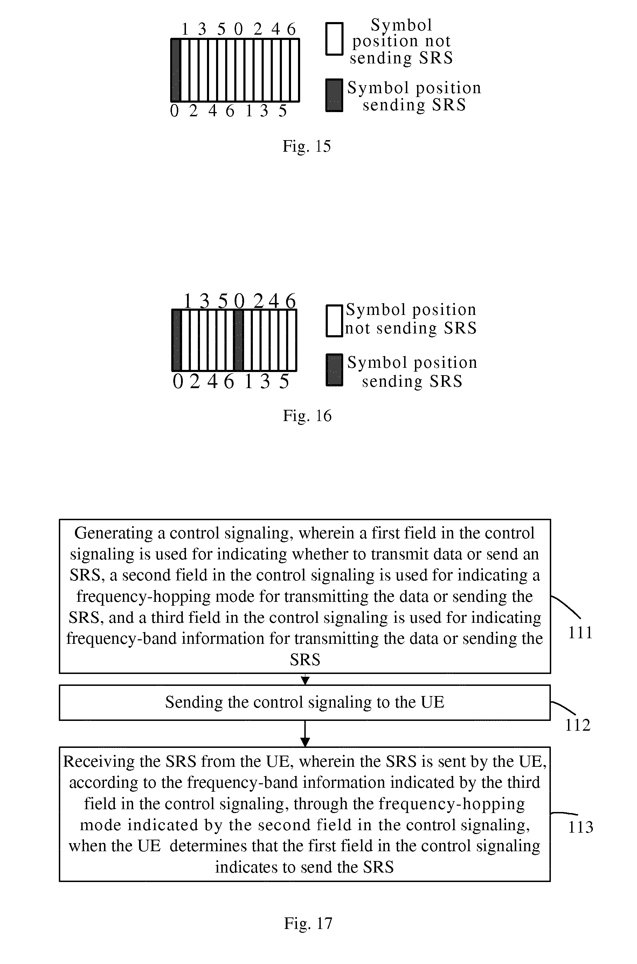

Specifically, the serial numbers of the subframe symbol positions in one subframe sent by the UE to the BS may be nonconsecutive, which is particularly suitable to the situation where one subframe includes a plurality of timeslots. For example, as illustrated in Fig. 15, the serial numbers of the subframe symbol positions in each timeslot are ordered from the same initial serial number and are consecutive. For this situation, the field indicating the symbol positions indicates timeslot symbol positions, i.e., subframe symbol positions in a timeslot. The timeslot for sending the SRS may be indicated by the field indicating the subframe timeslot. As shown in Fig. 15, through the field indicating the subframe timeslot, the control signaling indicates the UE to send the SRS in the first timeslot, and the field indicating timeslot symbol positions indicates the UE to send the SRS at the first symbol position, so the UE sends the SRS at the first symbol position in the first timeslot according to the indications. Or as illustrated in Fig. 16, through the field indicating the subframe timeslot, the control signaling indicates the UE to send the SRS in the first and second timeslots, and the field indicating timeslot symbol positions indicates the UE to send the SRS at the first symbol position, so the UE sends the SRS at the first symbol positions in the first and second timeslots according to the indications.

3. Sending the SRS generated from an orthogonal code indicated by the control signaling, according to the frequency-band information indicated by the third field, through the frequency-hopping mode indicated by the second field in the control signaling, when the first field in the control signaling indicates to send the SRS, wherein the control signaling further comprises a field indicating the orthogonal code.

The BS may allocate different orthogonal codes to the SRSs of different UEs through the control signaling. The UEs employ the orthogonal codes issued by the BS to ensure the orthogonality between different UEs, thereby avoiding the mutual interference between the UEs.

When sending the SRS, the UE may simultaneously include one or more of the above three operations. The BS may use the fourth field in the control signaling to indicate one or more of the subframe timeslot, the symbol position and the orthogonal code used for sending the SRS. Of course, the BS may also reuse the third field in the control signaling to indicate one or more of the subframe timeslot, the symbol position and the orthogonal code used for sending the SRS. Or, the BS may notify the UE of these resources for use through other signaling.

Further, based on the above subframe structure having multiple timeslots, the BS may indicate, through other signaling or other field in the control signaling, whether the intra-subframe frequency-hopping or the inter-subframe frequency-hopping is employed by the UE to send the SRS.

The intra-subframe frequency-hopping indicates that the frequency-bands used by the UE to send the SRS may be different in the same and between different subframes. For example, as illustrated in Fig. 5, in the first subframe where the SRS is sent for the first time, the UE sends the SRS on the 1st frequency-band in the first timeslot of the first subframe, and then sends the SRS on the 4th frequency-band in the second timeslot of the first subframe. In the second subframe where the SRS is sent for the second time, the UE sends the SRS on the 2nd frequency-band in the first timeslot of the second subframe, and then sends the SRS on the 3rd frequency-band in the second timeslot of the second subframe.

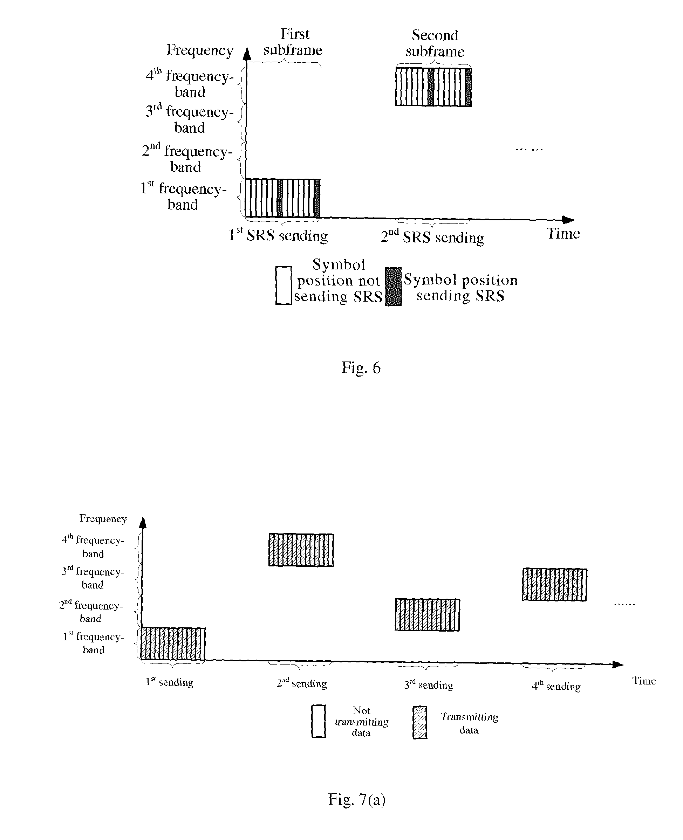

The inter-subframe frequency-hopping indicates that the frequency-bands used by the UE to send the SRS are different in different subframes, while identical in the same subframe. For example, as illustrated in Fig. 6, in the first subframe where the SRS is sent for the first time (the SRS is located at the 7th and 14th symbol positions), the UE sends the SRS on the 1st frequency-band; and in the second subframe where the SRS is sent for the second time, the UE sends the SRS on the 4th frequency-band.

Further, when the frequency-hopping mode for sending SRS is affirmative frequency-hopping, the embodiment of the present invention further includes the following steps.

A signaling that indicates a frequency-hopping rule is received from the BS.

The UE determines, in the frequency-hopping rule, the frequency-band that should be used for sending the SRS herein according to the current time offset and the frequency-band information indicated by the third field in the control signaling.

The step of sending the SRS, according to the frequency-band information indicated by the third field in the control signaling, through the frequency-hopping mode indicated by the second field in the control signaling, when the first field in the control signaling indicates to send the SRS specifically includes: when the first field in the control signaling indicates to send the SRS, and the frequency-hopping mode indicated by the second field in the control signaling is affirmative frequency-hopping, obtaining a sending frequency-band according to the frequency-band information indicated by the third field in the control signaling and the frequency-hopping rule, and sending the SRS in the sending frequency-band. The signaling that indicates the frequency-hopping rule includes relevant parameters required for determining the sending frequency-band, while the function construction itself required for determining the sending frequency-band may be issued with the signaling or preset in the UE.

Further, the signaling that indicates the frequency-hopping rule may reuse relevant signaling indicating to transmit the data. When the signaling indicating the frequency-hopping rule originally used for transmitted data is used for indicating to send the SRS, the order of the frequency-bands for sending the SRS may be the same as the order of the frequency-bands for transmitting the data.

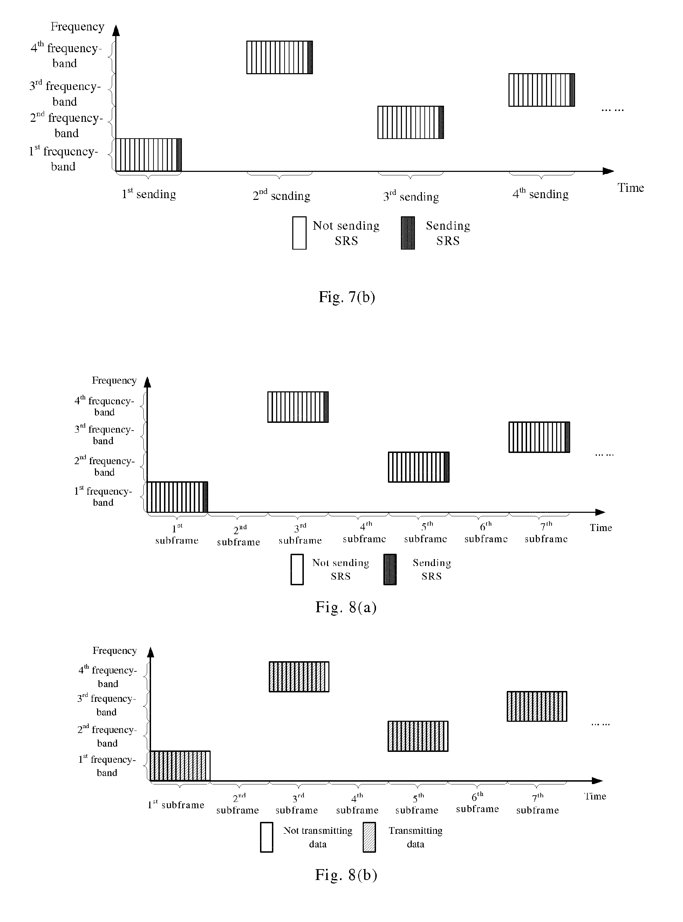

The case where the order of the frequency-bands for sending the SRS is the same as the order of the frequency-bands for transmitting the data for example is illustrated in Fig. 7. When the UE performs an uplink data transmission, as illustrated in Fig. 7(a), during the sending for 1st, 2nd and 3rd, 4th times, the UE sends data symbols through the 1st, 4th, 2nd and 3rd frequency-bands. When the UE sends the SRS, as illustrated in Fig. 7(b), during the sending for 1st, 2nd and 3rd, 4th times, the UE similarly sends the SRSs through the 1st, 4th, 2nd and 3rd frequency-bands. Thus, frequency-hopping related signaling for the Physical Uplink Shared Channel (PUSCH) can be multiplexed, so as to further reduce the signaling overhead.

Referring to Fig. 17, in correspondence with the sending of the SRS, Embodiment 1 of the present invention further provides a method for receiving an SRS, including:

Step 111: generating a control signaling, wherein a first field in the control signaling is used for indicating whether to transmit data or send an SRS, a second field in the control signaling is used for indicating a frequency-hopping mode for transmitting the data or sending the SRS, and a third field in the control signaling is used for indicating frequency-band information for transmitting the data or sending the SRS.

Step 112: sending the control signaling to the UE.

Step 113: receiving the SRS from the UE, wherein the SRS is sent by the UE, according to the frequency-band information indicated by the third field in the control signaling, through the frequency-hopping mode indicated by the second field in the control signaling, when the UE determines that the first field in the control signaling indicates to send the SRS.

The method for receiving the SRS corresponds to the method for sending the SRS, i.e., it generates a control signaling, and receives an SRS sent or data transmitted according to the control signaling. The reuse of the signaling indicating to transmit data decreases the signaling overhead and the complexity of the communication system, and can ensure the backward compatibility of the communication system.

On the basis of Embodiment 1, Embodiment 2 of the present invention gives an example of sending the SRS in multiple times.

Before step 101 of receiving the control signaling from the BS, the method for sending the SRS according to the embodiment of the present invention further includes:

Step 201: receiving a semi-static scheduling parameter sent by the BS.

In which, the semi-static scheduling parameter includes a sending periodicity value of the SRS.

The step of sending the SRS, according to the frequency-band information indicated by the third field in the control signaling, through the frequency-hopping mode indicated by the second field in the control signaling, when the first field in the control signaling indicates to send the SRS specifically includes:

sending the SRS periodically in the light of the sending periodicity value, according to the frequency-band information indicated by the third field in the control signaling, through the frequency-hopping mode indicated by the second field in the control signaling, when the first field in the control signaling indicates to send the SRS.

When the communication system employs the semi-static scheduling transmission, it means that the BS sends a semi-static scheduling signaling to the UE to activate the semi-static scheduling transmission, and after receiving the semi-static scheduling signaling, the UE can periodically send the signal without repeatedly receiving a new signaling, thereby being able to save signaling for the scenario of continuous transmission.

The embodiment of the present invention multiplexes the semi-static scheduling transmission mechanism, and the BS sends the semi-static scheduling parameter to the UE in advance so that the semi-static scheduling parameter includes the periodicity value for semi-statically sending the SRS. Next, the BS sends a control signaling to the UE to activate the semi-static scheduling transmission, and after receiving the control signaling, the UE reads the fields in the control signaling. When the control signaling indicates to send the SRS, the frequency-hopping mode indicated by the control signaling is used to send the SRS on the frequency-band obtained from the frequency-band information in the light of the semi-static scheduling sending periodicity value included in the semi-static scheduling signaling. When the control signaling indicates to transmit the data, the frequency-hopping mode indicated by the control signaling is used to transmit the data symbols in the frequency-band obtained from the frequency-band information in the light of the semi-static scheduling sending periodicity value included in the semi-static scheduling signaling. For example, referring to Fig. 8, one subframe includes 14 symbols, and assuming that the UE transmits data in the previous 13 symbols while sending an SRS in the last symbol, and the semi-static scheduling parameter indicates that the sending cycle is 2 subframes. When the control signaling indicates the UE to send the SRS, the UE sends the SRS in a manner as illustrated in Fig. 8(a); and when the control signaling indicates the UE to transmit the data, the UE transmits the data in a manner as illustrated in Fig. 8(b). If the BS does not need the UE to send the SRS, the BS may stop periodically sending the SRS through deactivation.

Further, the time interval for sending the SRS is equal to the time interval for transmitting the data, i.e., herein the sending periodicity value of the SRS is equal to the transmitting periodicity value of the data.

When the sending periodicity value of the SRS is equal to the transmitting periodicity value of the data, relevant signaling for data transmission may be reused to stop sending the SRS.

The embodiment of the present invention multiplexes the semi-static scheduling mechanism of the communication system, issues the sending cycle of the SRS through the semi-static scheduling parameter, and sends the SRS for multiple times after the cycle parameter is issued for one time, thereby further saving the signaling overhead.

On the basis of Embodiment 1, Embodiment 3 of the present invention gives another example of sending the SRS in multiple times.

The number of times of sending the SRS by the UE may be realized through any of the following manners:

1. In step 101, setting the number of times of sending the SRS in the BS and the UE, before receiving the control signaling from the BS.

The step of sending the SRS, according to the frequency-band information indicated by the third field in the control signaling, through the frequency-hopping mode indicated by the second field in the control signaling, when the first field in the control signaling indicates to send the SRS specifically includes: sending the SRS periodically in the light of the set number of times, according to the frequency-band information indicated by the third field in the control signaling, through the frequency-hopping mode indicated by the second field in the control signaling, when the first field in the control signaling indicates to send the SRS. Thus, the BS does not need to send a signaling to notify the UE of the number of times of sending the SRS.

2. In step 101, the UE receives a signaling indicating the number of times of sending the SRS issued from the BS, before receiving the control signaling from the BS.

The step of sending the SRS, according to the frequency-band information indicated by the third field in the control signaling, through the frequency-hopping mode indicated by the second field in the control signaling, when the first field in the control signaling indicates to send the SRS specifically is: sending the SRS periodically in the light of the number of times indicated by the signaling, according to the frequency-band information indicated by the third field in the control signaling, through the frequency-hopping mode indicated by the second field in the control signaling, when the first field in the control signaling indicates to send the SRS. Thus, the design of the communication system can achieve a higher flexibility.

Further, the embodiment of the present invention can send the SRS for multiple times through the following step, which may be performed independently, or together with the above method for sending the SRS or in combination with the method for periodically sending the SRS to send the SRS for multiple times.

In step 102, after sending the SRS, according to the frequency-band information indicated by the third field in the control signaling, through the frequency-hopping mode indicated by the second field in the control signaling, the BS determines whether the UE needs to send the SRS again, and notifies the UE to perform the operation through a signaling. The SRS is sent to the BS at a next sending time of the SRS when the received signaling for ACK/NACK transmission indicates to continue to send the SRS, and/or the sending of the SRS is stopped when the received signaling for ACK/NACK transmission indicates to stop sending the SRS.

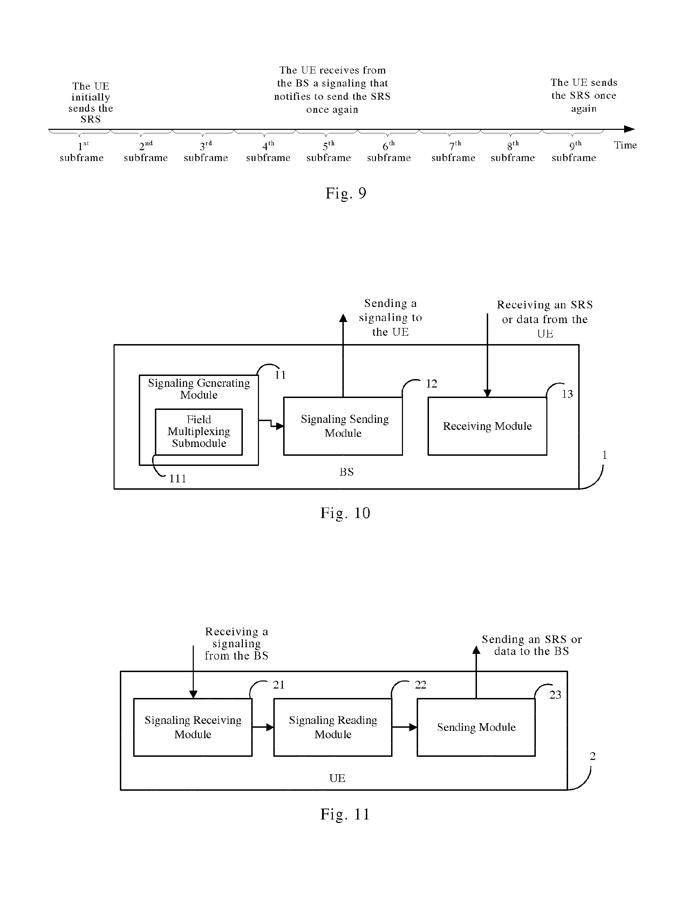

For example, as illustrated in Fig. 9, in the 1st subframe, the UE initially sends the SRS; in the 5th subframe, the BS sends a signaling to the UE to notify the UE to send the SRS once again; and in the 9th subframe, the UE sends the SRS once again according to the indication from the BS.

Particularly, when determining whether the SRS should be sent once again, the UE receives a signaling for ACK/NACK (positive acknowledge/negative acknowledge) transmission sent by the BS, wherein the signaling for ACK/NACK transmission indicates whether to continue to send the SRS, while an ACK/NACK signaling is used for a signal feedback in the Hybrid Automatic Repeat Request (HARQ) mechanism of the communication system. The embodiment of the present invention feeds back whether retransmission of the SRS needs to be performed by multiplexing the signaling in the HARQ mechanism, and the BS indicates the UE whether to continue to send the SRS by sending an ACK/NACK to the UE. For example, a Physical HARQ Indicator Channel (PHICH) in a Long Term Evolution (LTE) system may be employed, so as to further multiplex the PUSCH transmission mechanism (in the LTE system, the PHICH is used for notifying the UE whether to re-send the PUSCH), decrease the system complexity and bring a higher flexibility.

Next, the HARQ mechanism of the communication system will be explained. In the HARQ technology, in the nth subframe the UE initially sends the PUSCH; in the n+4th subframe, the BS sends the ACK/NACK signaling to the UE to notify the UE whether to re-send the PUSCH; if the BS sends a NACK to the UE, it means that the UE needs to re-send the PUSCH, and the UE will send the PUSCH once again in the n+8th subframe. Thus, the BS performs a more reliable decoding of the PUSCH through a plurality of transmissions, and the interval between the initial transmission and the retransmission is 8 subframes, i.e., the round-trip-time is equal to a time of 8 subframes.

Further, in the embodiment of the present invention, the time interval for sending the SRS is equal to the time interval for transmitting the data, i.e., herein the time interval for sending the SRS is equal to the time interval for sending the PUSCH.

When the interval for the UE to send the SRS for multiple times is equal to the round-trip-time for the UE to perform the HARQ transmission, the BS can receive the SRSs in the same manner for receiving the initial transmission and the retransmission of the PUSCH, thereby decreasing the system complexity and benefiting the BS scheduling. When a frequency-hopping occurs between the SRSs sent for multiple times, the BS can obtain a better diversity gain by receiving the SRSs. For example, when the UE sends the SRS for four times and each time uses different frequency-bands, the BS can acquire channel information of four frequency-bands through the four times of sending.

Embodiment 4 of the present invention further multiplexes the fields in the control signaling of Embodiment 1, so as to further reduce the overhead of the control signaling.

Further, in the control signaling in the embodiment of the present invention, the first field for indicating whether to transmit data or send an SRS and the second field for indicating a frequency-hopping mode for transmitting the data or sending the SRS are the same field in the control signaling. The embodiment of the present invention may use the field to indicate sending the SRS through affirmative frequency-hopping or transmitting the data through negative frequency-hopping; or indicate sending the SRS through negative frequency-hopping or transmitting the data through affirmative frequency-hopping.

In the application of the discontinuous frequency-band transmission (i.e., the UE transmits signals in the discontinuous frequency-bands at the same time), since the signals transmitted in the discontinuous frequency-bands have a relatively good diversity effect, the data transmission in the discontinuous frequency-bands generally does not need to obtain additional diversity effect through frequency-hopping, while the SRS is generally sent through frequency-hopping, thus the multiple fields in the control signaling may be multiplexed together for a joint encoding. For example, in the control signaling for the discontinuous frequency-band transmission, the first field may be multiplexed with the second field. Specifically, the first field in the control signaling includes one bit. When the bit is 1, it indicates the UE to send the SRS through frequency-hopping mode 1, and when the bit is 0, it indicates the UE to transmit the data through frequency-hopping mode 2, wherein for example, the frequency-hopping mode 1 represents affirmative frequency-hopping, while the frequency- hopping mode 2 represents negative frequency-hopping. When the bit is 1, it indicates the UE to send the SRS in affirmative frequency-hopping mode, so as to facilitate the BS to acquire the channel information of multiple frequency-bands. When the bit is 0, it indicates the UE to transmit the data in negative frequency-hopping mode; in that case, as the data is transmitted in the discontinuous frequency-bands, a good diversity effect can be obtained even through negative frequency-hopping. The embodiment of the present invention is suitable to the UE having multi-antenna input and multi-antenna output.

In correspondence with the SRS sending in the embodiment of the present invention, the BS receiving the SRS generates a control signaling in which a first field and a second field are the same field.

The embodiment of the present invention utilizes the characteristics of the data transmission and the SRS sending in the communication system, and multiplexes the fields in a control signaling to indicate with one field whether to send an SRS or transmit data. Meanwhile, the field also indicates the frequency-hopping mode for sending the SRS or transmitting the data. Thus, the control signaling overhead is further reduced.

Referring to Fig. 10, Embodiment 5 of the present invention provides a BS 1 for performing the steps of the corresponding method embodiment mentioned above. The BS 1 includes: a signaling generating module 11 configured to generate a control signaling, wherein a first field in the control signaling is used for indicating whether to transmit data or send an SRS, a second field in the control signaling is used for indicating a frequency-hopping mode for transmitting the data or sending the SRS, and a third field in the control signaling is used for indicating frequency-band information for transmitting the data or sending the SRS; a signaling sending module 12 configured to send the control signaling to the UE; and a receiving module 13 configured to receive the SRS from the UE, wherein the SRS is sent by the UE, according to the frequency-band information indicated by the third field in the control signaling, through the frequency-hopping mode indicated by the second field in the control signaling, when the UE determines that the first field in the control signaling indicates to send the SRS.

The embodiment of the present invention reuses the signaling indicating to transmit the data with the signaling indicating to send the SRS. When it needs the UE to send the SRS, the BS sends a control signaling to indicate the UE to send the SRS, and the UE reads the control signaling and sends the SRS according to the frequency-band information and the frequency-hopping mode indicated by the control signaling. When it needs the UE to transmit the data, the BS sends a control signaling to indicate the UE to transmit the data, and the UE reads the control signaling and transmits the data according to the frequency-band information and the frequency-hopping mode indicated by the control signaling.

In the design of the communication system, the uplink data transmission can support the frequency-hopping mechanism, thus the reuse of the signaling indicating to transmit the data and the signaling indicating to send the SRS can save the overhead of the signaling additionally designed for sending the SRS, simplify the signaling design, decrease the complexity of the communication system, and ensure the backward compatibility of the communication system. The present invention integrates the fields having multiple indicative meanings into one kind of signaling, thereby reducing the number of times of sending the signaling, thus the signaling overhead is saved and the complexity of the communication system is decreased.

Further, referring to Fig. 10, the signaling generating module 11 includes a field multiplexing submodule 111 configured to jointly encode the first field and the second field into one field.

The field used for indicating whether to send the SRS or transmit the data included in the control signaling for the discontinuous frequency-band transmission may be multiplexed with the field used for indicating the frequency-hopping mode. That is, one field is used for indicating whether to send the SRS or transmit the data, and meanwhile the field also indicates the frequency-hopping mode for sending the SRS or transmitting the data, thus the control signaling overhead is further reduced.

Referring to Fig. 11, Embodiment 6 of the present invention provides a UE 2 corresponding to the BS of Embodiment 5 in the communication system, for performing the steps of the corresponding method embodiment mentioned above. The UE 2 including: a signaling receiving module 21 configured to receive a control signaling from the BS, wherein a first field in the control signaling is used for indicating whether to transmit data or send an SRS, a second field in the control signaling is used for indicating a frequency-hopping mode for transmitting the data or sending the SRS, and a third field in the control signaling is used for indicating frequency-band information for transmitting the data or sending the SRS; a signaling reading module 22 configured to determine whether the control signaling indicates to send the SRS or transmit the data according to the first field in the control signaling; and a sending module 23 configured to send the SRS, according to the frequency-band information indicated by the third field in the control signaling, through the frequency-hopping mode indicated by the second field in the control signaling, when the first field in the control signaling indicates to send the SRS.

The frequency-hopping mode in the embodiment of the present invention at least includes affirmative frequency-hopping and negative frequency-hopping. When the SRS is sent through negative frequency-hopping, the sending module uses the frequency-band indicated in the frequency-band information to send the SRS. When the SRS is sent through affirmative frequency-hopping, a frequency-band used at the sending time of the SRS is obtained according to the frequency-band information indicated by the control signaling and a frequency-hopping rule, and then the SRS is sent according to the frequency-band used at the sending time of the SRS. For example, the frequency-band information may be the original frequency-band information for frequency-hopping. The UE may determine, in the set frequency-hopping rule, a frequency-band to be used for sending the SRS at the ith sending time according to the time offset of the ith sending time and the original frequency-band, and send the SRS at the ith sending time in the frequency-band to be used. Further, the UE may send a plurality of SRSs in a plurality of frequency-bands according to the indication of the control signaling.

In which, the frequency-hopping rule may be described through mathematical function, including the function construction itself and the parameters related to the function, for example, F = f(f_start,BW,ts,...). F obtained from the function indicates the frequency-band to be used for sending the SRS at next time, and f_start, BW and ts are variable Information, wherein f_start denotes the original frequency-band, BW denotes the width of the frequency-band, and ts denotes the time offset information, and wherein f_start and BW are notified through the second field of the control signaling, and ts may indicate the serial number of the sending time of the SRS (e.g., the tsth subframe in one subframe), or the times of sending the SRS (e.g., the next sending is the tsth sending), etc. The frequency-band that should be used at the sending time of the SRS can be obtained from the function.

The UE performs the operation of sending the SRS or transmitting the data according to the control signaling sent by the BS, and switches between the two states of sending the SRS and transmitting the data according to the control signaling. The UE only performs one of the operations of sending the SRS and transmitting the data according to the received control signaling, thereby avoiding the signal interference generated when the above two operations are performed at the same time.

Referring to Fig. 12, the sending module 23 further includes at least one of a timeslot loading submodule 231, a symbol position loading submodule 232 and an orthogonal code loading submodule 234.

The timeslot loading submodule 231 is configured to send the SRS in a subframe timeslot indicated by the control signaling, according to the frequency-band information indicated by the third field, through the frequency-hopping mode indicated by the second field in the control signaling, when the first field in the control signaling indicates to send the SRS, wherein the control signaling further comprises a field indicating the subframe timeslot.

The symbol position loading submodule 232 is configured to send the SRS in a symbol position indicated by the control signaling, according to the frequency-band information indicated by the third field, through the frequency-hopping mode indicated by the second field in the control signaling, when the first field in the control signaling indicates to send the SRS, wherein the control signaling further comprises a field indicating the symbol position.

The orthogonal code loading submodule 234 is configured to send the SRS generated from an orthogonal code indicated by the control signaling, according to the frequency-band information indicated by the third field, through the frequency-hopping mode indicated by the second field in the control signaling, when the first field in the control signaling indicates to send the SRS, wherein the control signaling further comprises a field indicating the orthogonal code.

In different communication systems, one subframe sent by the UE to the BS may include different numbers of timeslots, thus one or more subframe timeslots may be used when the control signaling indicates the UE to send the SRS.

The symbol position includes a subframe symbol position or a timeslot symbol position, and the control signaling may indicate one or more symbol positions. Specifically, one subframe sent by the UE to the BS may include a plurality of subframe symbol positions with consecutive serial numbers, and the control signaling may indicate the UE to send the SRS in one or more subframe symbol positions. Being different from the aforementioned situation where one subframe includes a plurality of subframe symbol positions with consecutive serial numbers, the serial numbers of the subframe symbol positions in one subframe sent by the UE to the BS may be nonconsecutive, which is particularly suitable to the situation where one subframe includes a plurality of timeslots. For this situation, the field indicating the symbol position indicates timeslot symbol positions, i.e., subframe symbol positions in a timeslot. The timeslot for sending the SRS may be indicated by the field indicating the subframe timeslot.

The BS may allocate different orthogonal codes to the SRSs of different UEs through the control signaling. The UEs load the orthogonal codes issued by the BS to ensure the orthogonality between different UEs, thereby avoiding the mutual interference between the UEs.

Further, in case one subframe includes a plurality of timeslots among which intra-subframe frequency-hopping occurs, if two timeslots both have an SRS sent therein, the capability of detecting the channel information can be further enhanced.

Further, the signaling receiving module 21 is further configured to receive a semi-static scheduling parameter sent by the BS, wherein the semi-static scheduling parameter includes a sending periodicity value of the SRS. The signaling reading module 22 is further configured to determine the sending periodicity value of the SRS indicated by the semi-static scheduling parameter. The sending module 23 is further configured to send the SRS periodically in the light of the sending periodicity value, according to the frequency-band information indicated by the third field in the control signaling, through the frequency-hopping mode indicated by the second field in the control signaling, when the first field in the control signaling indicates to send the SRS.

The embodiment of the present invention multiplexes the semi-static scheduling transmission mechanism, and the BS sends the semi-static scheduling parameter to the UE in advance so that the semi-static scheduling parameter includes the periodicity value for semi-statically sending the SRS. Next, the BS sends a control signaling to the UE to activate the semi-static scheduling transmission, and after receiving the control signaling, the UE reads the fields in the control signaling. When the control signaling indicates to send the SRS, the frequency-hopping mode indicated by the control signaling is used to send the SRS based on the frequency-band information according to the semi-static scheduling sending periodicity value included in the semi-static scheduling signaling. The embodiment of the present invention multiplexes the semi-static scheduling mechanism of the communication system, issues the sending periodicity value of the SRS through the semi-static scheduling parameter, and sends the SRS for multiple times after the cycle parameter is issued for one time, thereby further saving the signaling overhead.

The UE may send the SRS for multiple times by issuing the sending periodicity value through the semi-static scheduling parameter, or after the UE sends the SRS to the BS each time, the BS determines whether the UE is still needed to send the SRS once again, and notify the UE to perform the operation through a signaling.

Further, the signaling receiving module 21 is further configured to receive from the BS a signaling for ACK/NACK transmission. The signaling reading module 22 is further configured to determine whether the signaling for ACK/NACK transmission indicates to continue to send the SRS or stop sending the SRS. The sending module 23 is further configured to send the SRS to the BS at the next sending time of the SRS, when the received signaling for ACK/NACK transmission indicates to continue to send the SRS, and/or stop sending the SRS when the received signaling for ACK/NACK transmission indicates to stop sending the SRS.

The ACK/NACK signaling is used for a signal feedback in the Hybrid Automatic Repeat Request (HARQ) mechanism of the communication system. The embodiment of the present invention feeds back whether retransmission of the SRS needs to be performed by multiplexing the signaling in the HARQ mechanism, and the BS indicates the UE whether to continue to send the SRS by sending an ACK/NACK to the UE. For example, a Physical HARQ Indicator Channel (PHICH) in a Long Term Evolution (LTE) system may be employed, so as to further multiplex the PUSCH transmission mechanism (in the LTE system, the PHICH is used for notifying the UE whether to re-send the PUSCH), decrease the system complexity and bring a higher flexibility.

Further, regarding the sending module, the time interval for sending the SRS is equal to the time interval for transmitting the data.

For periodically sending the SRS or transmitting the data, the time interval is the sending periodicity value of the SRS or the transmitting periodicity value of the data. When the sending periodicity value of the SRS is equal to the transmitting periodicity value of the data, relevant signaling for data transmission may be reused to stop sending the SRS.

In the case where the SRS is sent in accordance with a number of times or according to the indication of the BS, the time interval for sending the SRS may be equal to the time interval for sending the PUSCH. When the interval for the UE to send the SRS for multiple times is equal to the round-trip-time for the UE to perform the HARQ transmission, the BS can receive the SRS in the same manner for receiving the initial transmission and retransmission of the PUSCH, thereby decreasing the system complexity and promoting the BS scheduling.

Further, the signaling receiving module 21 is further configured to receive from the BS, a signaling indicating a frequency-hopping rule. The sending module 23 is further configured to obtain a frequency-band used at the sending time of the SRS according to the frequency-band information indicated by the third field in the control signaling and the frequency-hopping rule, and send the SRS on the frequency-band used at the sending time of the SRS, when the first field in the control signaling indicates to send the SRS and the frequency-hopping mode indicated by the second field in the control signaling is affirmative frequency-hopping.

The UE determines, in the frequency-hopping rule, the frequency-band that should be used for sending the SRS herein according to the current time offset and the frequency-band information indicated by the second field in the control signaling.

Further, the signaling that indicates the frequency-hopping rule may be multiplexed with relevant signaling indicating to transmit the data. When the signaling indicating to transmit the data and indicating the frequency-hopping rule is used for indicating to send the SRS, the order of the frequency-bands for sending the SRS may be the same as that of the frequency-bands for transmitting the data. In the process of sending the SRS for multiple times, the UE sends the SRS in a frequency-hopping rule for data transmission. When the order of the frequency-bands for sending the SRS is the same as the order of the frequency-bands for transmitting the data, frequency-hopping related signaling for the Physical Uplink Shared Channel (PUSCH) can be multiplexed, so as to further reduce the signaling overhead.

Referring to Fig. 13, Embodiment 7 of this invention provides a communication system 3 including the BS 1 and the UE 2 of the aforementioned embodiments, for performing the steps of corresponding method embodiment mentioned above. The BS1 is configured to generate a control signaling, wherein a first field in the control signaling is used for indicating whether to transmit data or send an SRS, a second field in the control signaling is used for indicating a frequency-hopping mode for transmitting the data or sending the SRS, and a third field in the control signaling is used for indicating frequency-band information for transmitting the data or sending the SRS; send the control signaling to the UE 2; and receive the SRS sent by the UE 2 using the frequency-hopping mode indicated by the second field in the control signaling according to the frequency-band information indicated by the third field in the control signaling, after determining that the first field in the control signaling indicates to send the SRS. The UE 2 is configured to receive from the BS 1 the control signaling, determine whether the control signaling indicates to send the SRS or transmit the data according to the first field in the control signaling, and send the SRS according to the frequency-band information indicated by the third field in the control signaling through the frequency-hopping mode indicated by the second field in the control signaling when the first field in the control signaling indicates to send the SRS.

The BS reuses signaling to integrate multiple indications into one kind of signaling, thereby being able to save the overhead of the communication system in additionally designing a signaling for sending the SRS, meanwhile decrease the complexity of the communication system, and ensure the backward compatibility of the communication system. The UE only performs one of the operations of sending the SRS and transmitting the data according to the received control signaling, thereby avoiding the signal interference generated when the above two operations are performed at the same time.

A person skilled in the art is appreciable that the drawings are just schematic diagrams of the preferred embodiments, and the modules or flows in the drawings are not necessarily essential for implementing the present invention.

A person skilled in the art is appreciable that the modules in the embodiments may be combined into one module or further divided into multiple submodules.

The serial numbers of the embodiments of the present invention are just used for the convenience of description, rather than indicating the priorities thereof.

The above disclosure only relates to several embodiments of the present invention, and the present invention is not limited thereto. Any change conceivable to a person skilled in the art should fall within the protection scope of the present invention.

## Claims

1. A method for sending a Sounding Reference Signal (SRS), comprising:
receiving a control signaling from a Base Station (BS), wherein a first field in the control signaling is used for indicating whether to transmit data or send the SRS, a second field in the control signaling is used for indicating a frequency-hopping mode for transmitting the data or sending the SRS, and a third field in the control signaling is used for indicating frequency-band information for transmitting the data or sending the SRS;
determining whether the control signaling indicates to send the SRS or to transmit the data according to the first field in the control signaling; and
sending the SRS, according to the frequency-band information indicated by the third field in the control signaling, through the frequency-hopping mode indicated by the second field in the control signaling, when the first field in the control signaling indicates to send the SRS.

2. The method for sending the SRS according to claim 1, wherein the step of sending the SRS, according to the frequency-band information indicated by the third field in the control signaling, through the frequency-hopping mode indicated by the second field in the control signaling, when the first field in the control signaling indicates to send the SRS comprises at least one of the following operations:
sending the SRS in a subframe timeslot indicated by the control signaling, according to the frequency-band information indicated by the third field, through the frequency-hopping mode indicated by the second field in the control signaling, when the first field in the control signaling indicates to send the SRS, wherein the control signaling further comprises a field indicating the subframe timeslot;
sending the SRS in a symbol position indicated by the control signaling, according to the frequency-band information indicated by the third field, through the frequency-hopping mode indicated by the second field in the control signaling, when the first field in the control signaling indicates to send the SRS, wherein the control signaling further comprises a field indicating the symbol position; and
sending the SRS generated from an orthogonal code indicated by the control signaling, according to the frequency-band information indicated by the third field, through the frequency-hopping mode indicated by the second field in the control signaling, when the first field in the control signaling indicates to send the SRS, wherein the control signaling further comprises a field indicating the orthogonal code.

3. The method for sending the SRS according to claim 1 or 2, wherein,
the first field and the second field are the same field in the control signaling.

4. The method for sending the SRS according to claim 1 or 2, wherein before receiving the control signaling from the BS, the method comprises:
receiving a semi-static scheduling parameter sent by the BS, wherein the semi-static scheduling parameter comprises a sending periodicity value of the SRS; and
wherein the step of sending the SRS, according to the frequency-band information indicated by the third field in the control signaling, through the frequency-hopping mode indicated by the second field in the control signaling, when the first field in the control signaling indicates to send the SRS comprises:
sending the SRS periodically in the light of the sending periodicity value, according to the frequency-band information indicated by the third field in the control signaling, through the frequency-hopping mode indicated by the second field in the control signaling, when the first field in the control signaling indicates to send the SRS.

5. The method for sending the SRS according to claim 1 or 2, wherein before receiving the control signaling from the BS, the method further comprises:
setting the number of times of sending the SRS, wherein the step of sending the SRS, according to the frequency-band information indicated by the third field in the control signaling, through the frequency-hopping mode indicated by the second field in the control signaling, when the first field in the control signaling indicates to send the SRS comprises: sending the SRS in the light of the set number of times, according to the frequency-band information indicated by the third field in the control signaling, through the frequency-hopping mode indicated by the second field in the control signaling, when the first field in the control signaling indicates to send the SRS; or
receiving a signaling indicating the number of times of sending the SRS issued from the BS, wherein the step of sending the SRS, according to the frequency-band information indicated by the third field in the control signaling, through the frequency-hopping mode indicated by the second field in the control signaling, when the first field in the control signaling indicates to send the SRS comprises: sending the SRS in the light of the number of times indicated by the signaling, according to the frequency-band information indicated by the third field in the control signaling, through the frequency-hopping mode indicated by the second field in the control signaling, when the first field in the control signaling indicates to send the SRS.

6. The method for sending the SRS according to claim 1, 4 or 5, wherein,
after the step of sending the SRS, according to the frequency-band information indicated by the third field in the control signaling, through the frequency-hopping mode indicated by the second field in the control signaling, the method further comprises: sending the SRS to the BS at a next sending time of the SRS when a received signaling for ACK/NACK transmission indicates to continue to send the SRS, and/or stop sending the SRS when the received signaling for ACK/NACK transmission indicates to stop sending the SRS.

7. The method for sending the SRS according to any of claims 4 to 6, wherein,
a time interval for sending the SRS is equal to a time interval for transmitting the data.

8. The method for sending the SRS according to any of claims 1 to 7, further comprising:
receiving from the BS, a signaling indicating a frequency-hopping rule;
wherein the step of sending the SRS, according to the frequency-band information indicated by the third field in the control signaling, through the frequency-hopping mode indicated by the second field in the control signaling, when the first field in the control signaling indicates to send the SRS comprises:
obtaining a frequency-band used at a sending time of the SRS according to the frequency-band information indicated by the third field in the control signaling and the frequency-hopping rule, and sending the SRS on the frequency-band used at the sending time of the SRS when the first field in the control signaling indicates to send the SRS and the frequency-hopping mode indicated by the second field in the control signaling is affirmative frequency-hopping.

9. A method for receiving a Sounding Reference Signal (SRS), comprising:
generating a control signaling, wherein a first field in the control signaling is used for indicating whether to transmit data or send the SRS, a second field in the control signaling is used for indicating a frequency-hopping mode for transmitting the data or sending the SRS, and a third field in the control signaling is used for indicating frequency-band information for transmitting the data or sending the SRS;
sending the control signaling to a User Equipment (UE); and
receiving the SRS from the UE, wherein the SRS is sent by the UE, according to the frequency-band information indicated by the third field in the control signaling, through the frequency-hopping mode indicated by the second field in the control signaling, when the UE determines that the first field in the control signaling indicates to send the SRS.

10. The method for receiving the SRS according to claim 9, wherein the first field and the second field in the generated control signaling are the same field in the control signaling.

11. A Base Station (BS), comprising:
a signaling generating module configured to generate a control signaling, wherein a first field in the control signaling is used for indicating whether to transmit data or send a Sounding Reference Signal (SRS), a second field in the control signaling is used for indicating a frequency- hopping mode for transmitting the data or sending the SRS, and a third field in the control signaling is used for indicating frequency-band information for transmitting the data or sending the SRS;
a signaling sending module configured to send the control signaling to a User Equipment (UE); and
a receiving module configured to receive the SRS from the UE, wherein the SRS is sent by the UE, according to the frequency-band information indicated by the third field in the control signaling, through the frequency-hopping mode indicated by the second field in the control signaling, when the UE determines that the first field in the control signaling indicates to send the SRS.

12. The BS according to claim 11, wherein the signaling generating module comprises: a field multiplexing submodule configured to jointly encode the first field and the second field into one field.

13. A User Equipment (UE), comprising:
a signaling receiving module configured to receive a control signaling from a Base Station (BS), wherein a first field in the control signaling is used for indicating whether to transmit data or send a Sounding Reference Signal (SRS), a second field in the control signaling is used for indicating a frequency-hopping mode for transmitting the data or sending the SRS, and a third field in the control signaling is used for indicating frequency-band information for transmitting the data or sending the SRS;
a signaling reading module configured to determine whether the control signaling indicates to send the SRS or transmit the data according to the first field in the control signaling; and
a sending module configured to send the SRS, according to the frequency-band information indicated by the third field in the control signaling, through the frequency-hopping mode indicated by the second field in the control signaling, when the first field in the control signaling indicates to send the SRS.

14. The UE according to claim 12, wherein the sending module further comprises at least one of the following submodules:
a timeslot loading submodule configured to send the SRS in a subframe timeslot indicated by the control signaling, according to the frequency-band information indicated by the third field, through the frequency-hopping mode indicated by the second field in the control signaling, when the first field in the control signaling indicates to send the SRS, wherein the control signaling further comprises a field indicating the subframe timeslot;
a symbol position loading submodule configured to send the SRS in a symbol position indicated by the control signaling, according to the frequency-band information indicated by the third field, through the frequency-hopping mode indicated by the second field in the control signaling, when the first field in the control signaling indicates to send the SRS, wherein the control signaling further comprises a field indicating the symbol position; and
an orthogonal code loading submodule configured to send the SRS generated from an orthogonal code indicated by the control signaling, according to the frequency-band information indicated by the third field, through the frequency-hopping mode indicated by the second field in the control signaling, when the first field in the control signaling indicates to send the SRS, wherein the control signaling further comprises a field indicating the orthogonal code.

15. The UE according to claim 13, wherein,
the signaling receiving module is further configured to receive a semi-static scheduling parameter sent by the BS, wherein the semi-static scheduling parameter comprises a sending periodicity value of the SRS;
the signaling reading module is further configured to determine the sending periodicity value of the SRS indicated by the semi-static scheduling parameter; and
the sending module is further configured to send the SRS periodically in the light of the sending periodicity value, according to the frequency-band information indicated by the third field in the control signaling, through the frequency-hopping mode indicated by the second field in the control signaling, when the first field in the control signaling indicates to send the SRS.

16. The UE according to claim 11, wherein,
the signaling receiving module is further configured to receive a signaling for ACK/NACK transmission from the BS;
the signaling reading module is further configured to determine whether the signaling for ACK/NACK transmission indicates to continue to send the SRS or stop sending the SRS; and
the sending module is further configured to send the SRS to the BS at a next sending time of the SRS, when the signaling for ACK/NACK transmission indicates to continue to send the SRS, and/or stop sending the SRS when the received signaling for ACK/NACK transmission indicates to stop sending the SRS.

17. The UE according to claim 13, wherein,
the signaling receiving module is further configured to receive from the BS, a signaling indicating a frequency-hopping rule; and
the sending module is further configured to obtain a frequency-band used at a sending time of the SRS according to the frequency-band information indicated by the third field in the control signaling and the frequency-hopping rule, and send the SRS on the frequency-band used at the sending time of the SRS, when the first field in the control signaling indicates to send the SRS and the frequency-hopping mode indicated by the second field in the control signaling is affirmative frequency-hopping.
